# EUROPEAN PATENT APPLICATION

(11) **EP 4 339 786 A1**
(43) Date of publication of application: **20.03.2024**
(21) Application number: 23164792.6
(22) Date of filing: 28.03.2023
(51) Int. Cl.: G06F 11/30, G06F 11/32

(54) **METHOD OF TRACING CALL RELATIONSHIP AND DISPLAYING LOG INFORMATION ACCORDINGLY IN MSA**

(30) Priority: 16.09.2022 KR 20220117143
(71) Applicant: Openmaru, Inc., Seoul 04778 (KR)
(72) Inventor: KIM, Young Joo, 01687 Seoul, (KR); JEON, Jun Shik, 04714 Seoul, (KR); LEE, Gu Yong, 01775 Seoul (KR)
(74) Representative: Mewburn Ellis LLP

(57) **Abstract**

The present disclosure relates to a method for tracing a call relationship in an MSA and displaying log information accordingly, and relates to a method of easily recognizing at which stage of service a problem has occurred when a problem occurs during a process of providing the entire service by multiple applications in microservice architecture.

## Description

### BACKGROUND

### 1. FIELD

The present disclosure relates to a method of tracing a call relationship between multiple applications in microservice architecture and displaying log information according to the call relationship, and more particularly, to a method of tracing a call relationship between multiple applications executing a service and displaying log information of applications according to the call relationship for easy recognition so that at which stage of service a problem has occurred in a whole service being provided by multiple applications in microservice architecture.

### 2. DESCRIPTION OF RELATED ART

Microservice architecture(MSA) refers to an architecture implemented by dividing a large application or computing service into multiple applications each responsible for a specialized function in a state constructed in a server. In the microservice architecture, since the whole service is configured by modifying and combining multiple applications, it is free to add, delete, or improve functions, compared to monolithic architecture of the related art.

According to the related art, multiple applications constituting microservice architecture are divided according to functions and separately executed, and log information of such executed applications is stored in a separate storage space.

A problem may occur while the whole service is being provided due to the execution of multiple applications.

For example, when a customer orders a product with a predetermined membership in an online shopping mall, a calculated amount may be different from an amount estimated at the time of ordering. In this case, in order to solve the problem, it should be determined whether the problem results from a service stage of verifying a membership qualification, whether the problem results from a service stage of authenticating a price of the ordered product, whether the problem results from a service stage of calculating the amount, or whether the problem results from other service stages.

The whole service is provided by running multiple applications. That is, an application providing a certain service is executed, and an API is called in the application to provide a next-stage service, according to which another application providing the next-stage service is called and executed, thereby providing the whole service.

In this situation, information on a call relationship between multiple applications is not clear during the process of providing the whole service, so it is cumbersome to analyze each log information generated while the service is provided in detail from the log information of each application stored separately.

In other words, in a situation in which a call relationship between applications according to an API call is unclear, log information of each of multiple applications which are distributed and stored needs to be traced and analyzed in order to identify at which stage of service the problem has occurred. However, it takes a lot of time and manpower to analyze each log information of multiple applications providing the whole service, and therefore, finding the above problem by analyzing each of the entire log information has some limitations.

Furthermore, even if the entire log information according to the execution of multiple applications is implemented to be limited to a certain time range and displayed, it is not known which log information and which log information are log information according to a call relationship with each other, and thus, even if the log information is analyzed and the problem is identified, the log information is displayed without indicating according to which call relationship the log information is, and thus, there is a problem in that the identified problem is displayed in a state in which it is not exactly known whether the identified problem is the problem to be found in the first place.

Therefore, there is an urgent need for research on technical features allowing a problem occurring while multiple applications are being executed to provide the whole service to be easily recognized at which stage of service it has occurred.

(Patent Document 1) KR 10-2337962 B

### SUMMARY

An aspect of the present disclosure may provide a method of easily identifying at which stage of a service a problem occurs while multiple applications are executed in providing the whole service.

According to an aspect of the present disclosure, a method of tracing a call relationship between multiple applications and displaying log information on the call relationship by a server in which a microservice architecture including multiple applications is built, includes: (a) calling a first application among the multiple applications; (b) collecting log information of the first application from a first log collecting agent installed in the first application; (c) calling a second application among the multiple applications through an application programming interface (API) call from the first application; (d) collecting log information of the second application from a second log collecting agent installed in the second application; and (e) transmitting the log information of the first application collected in operation (b) and the log information of the second application collected in operation (d) to a log collecting server and displaying the transmitted log information of the first application and the transmitted log information of the second application on a display unit of the log collecting server.

Preferably, in operation (e), the log information of the first application and the log information of the second application according to a call relationship between the first application and the second application based on the API call in operation (c) may be displayed to be identified.

Preferably, in operation (b), as the first application is called, the first log collecting agent may issue a first transaction ID, and in operation (c), an API including information on the first transaction ID issued in operation (b) may be called, and information on the first transaction ID may be received by the second log collecting agent.

Preferably, in operation (d), the collected log information of the second application may include log information identified by the first transaction ID as information on a log progressed according to the API call in operation (c).

Preferably, in operation (e), the log information of the first application and the log information of the second application identified by the first transaction ID together with the first transaction ID may be transmitted to the log collecting server.

Preferably, topology of the multiple applications may be displayed on the display unit and topology regarding a call relationship between the first application and the second application identified by the first transaction ID may be displayed as a topology in a state in which the first application and the second application are connected to each other.

Log information of the multiple applications may be displayed on the display unit, and log information of the first application and log information of the second application according to a call relationship between the first application and the second application identified by the first transaction ID may be displayed to be identified in log information of the multiple applications.

By the solution to the problems, a call relationship between multiple applications may be traced in providing the whole service, and log information according to the call relationship may be displayed to be identified in the entire log information, and thus, problematic log information may be recognized and a call relationship in which the problematic log information is generated may be specified, thereby easily recognizing at which state of service a problem has occurred.

### BRIEF DESCRIPTION OF DRAWINGS

The above and other aspects, features and other advantages of the present disclosure will be more clearly understood from the following detailed description taken in conjunction with the accompanying drawings, in which:
FIGS. 1, 2A, and 2B conceptually illustrate microservice architecture according to the present disclosure;
FIG. 3 is a diagram schematically illustrating contents included in a log message transmitted from a log collecting agent to a log collecting server; and
FIG. 4 is a diagram schematically showing a state in which a call relationship is traced according to the present disclosure.

### DETAILED DESCRIPTION

Hereinafter, embodiments of the present disclosure will be described in detail to be easily embodied by those skilled in the art with reference to the accompanying drawings. In the drawings, the sizes or shapes of elements may be exaggeratedly illustrated for clarity and convenience of description. Moreover, the terms used henceforth have been defined in consideration of the functions of the present disclosure, and may be altered according to the intent of a user or operator, or conventional practice. Therefore, the terms should be defined on the basis of the entire content of this specification.

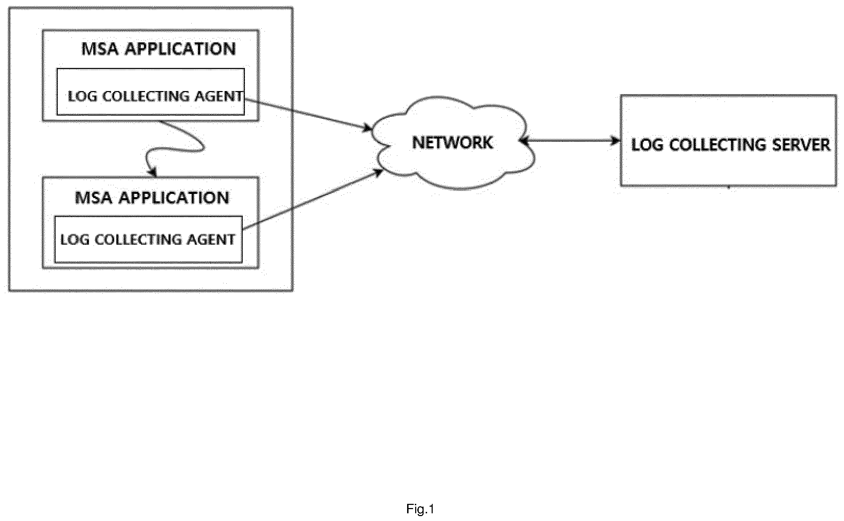

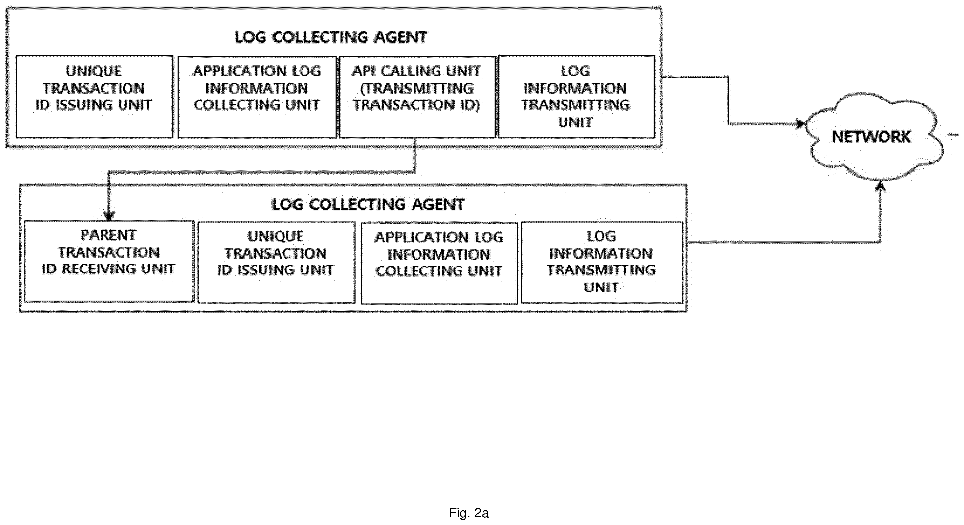

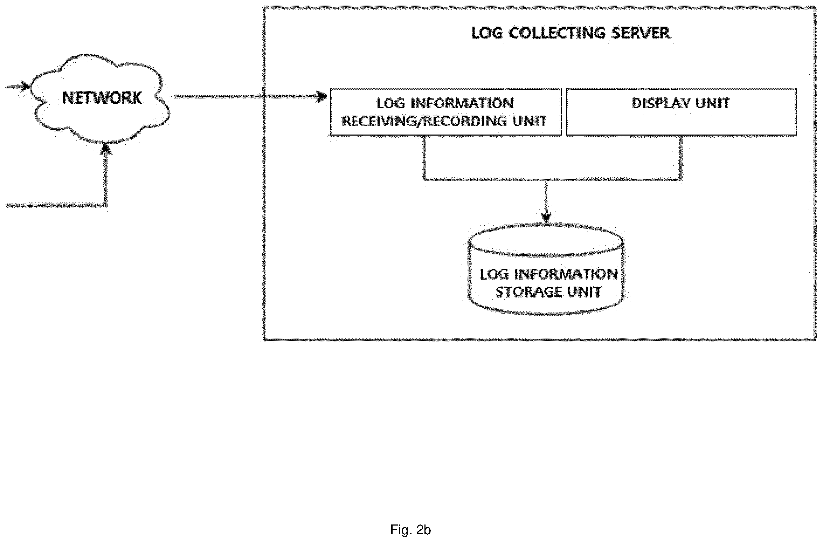

An apparatus of executing a method of tracing a call relationship between multiple applications and displaying log information on the call relationship in a server in which a microservice architecture including multiple applications is built will be described with reference to FIGS. 1 to 3.

A microservice architecture includes multiple applications, and multiple applications are executed to provide the whole service.

The microservice architecture according to the present disclosure may include multiple applications, a log collecting agent installed in each application, and a log collecting server receiving log information of the application collected by the log collecting agent through a network.

Each log collecting agent may include a transaction ID issuing unit, an application log information collecting unit, an API calling unit, a log information transmitting unit, and a parent transaction ID receiving unit.

In the transaction ID issuing unit, a unique transaction ID may be issued as an application in which a log collecting agent is installed is called. Accordingly, when a corresponding application is called according to a user call or an API call of another application, the transaction ID issuing unit may issue a unique transaction ID according to the call.

The application log information collecting unit may collect information such as a log of the corresponding application, the unique transaction ID issued by the transaction ID issuing unit, a server IP, an instance ID, a client IP, logged-in user ID, and a session ID, and the collected information may be transmitted to the log collecting server through the log information transmitting unit. In the case of Java language, Java Agent Services (JSR 87) technology may be used so that the agent may collect information such as a log left in a logging framework used by the application, a server IP, an instance ID, and a logged-in user ID without changing the application.

The API calling unit calls an application that provides a next stage of service. At this time, API call may perform with the unique transaction ID issued by the transaction ID issuing unit of the application being currently executed automatically added to a message header by the agent without changing the application.

The parent transaction ID receiving unit receives the unique transaction ID of the application providing a service of a previous stage, sets it as a parent transaction ID, and in this state, log information of the corresponding application may be collected in application log information collecting unit. That is, when an application is called, log information may be collected in a state in which the unique transaction ID issued by the transaction ID issuing unit and the parent transaction ID received according to the API call are set.

For example, when a second application is called according to the API call of a first application, the first transaction ID issued by the transaction ID issuing unit of the first log collecting agent installed in the first application is received by the parent transaction ID receiving unit of a second log collecting agent of the second application. At this time, the second log collecting agent issues a second transaction ID according to the call, and furthermore, log information may be collected in a state in which the first transaction ID is set as a parent transaction ID.

Again, when a third application is called according to the API call of the second application, the second transaction ID issued by the transaction ID issuing unit of the second log collecting agent installed in the second application is received by a parent transaction ID receiving unit of a third log collecting agent of a third application. At this time, similarly, the third log collecting agent issues a third transaction ID according to the call, and furthermore, log information may be collected in a state in which the second transaction ID is set as the parent transaction ID.

In this manner, a call relationship between the first application and the second application, a call relationship between the second application and the third application, and a call relationship among the first application, the second application, and the third application may be identified.

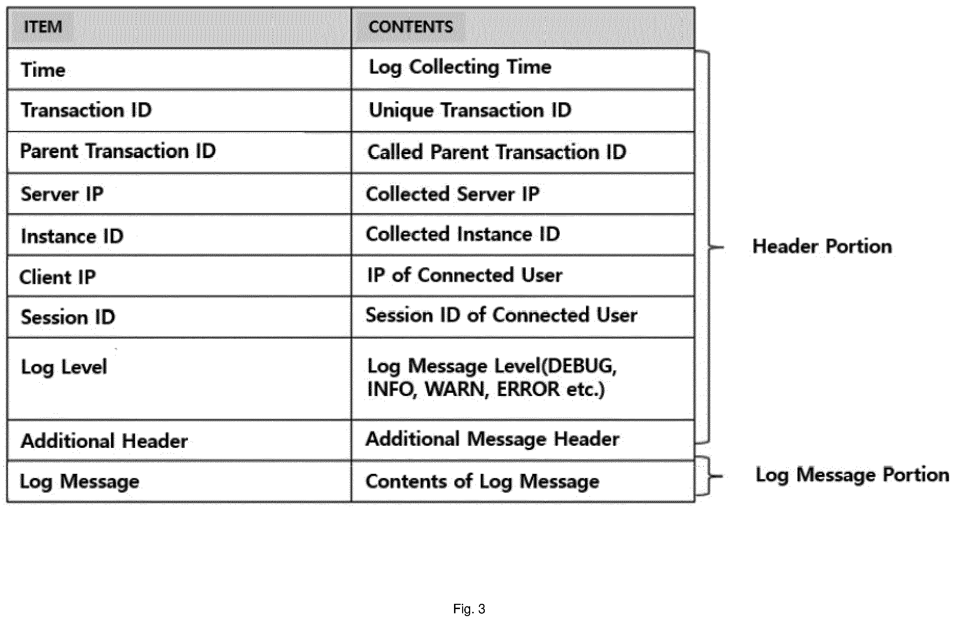

The log information transmitting unit transmits the collected log information to the log collecting server. When the log information is transmitted to the log collecting server, information as shown in FIG. 3 may be added to a message header and transmitted so that the log information according to the call relationship, a server IP, or a client ID may be identified.

The log collecting server may include a log information receiving/recording unit, a display unit, and a log information storage unit.

The log information receiving/recording unit receives log information collected by the log collecting agent of each application, and records and stores the log information in the log information storage unit.

The display unit displays the log information stored in the log information storage unit, and the log information may be displayed in various forms desired by the user.

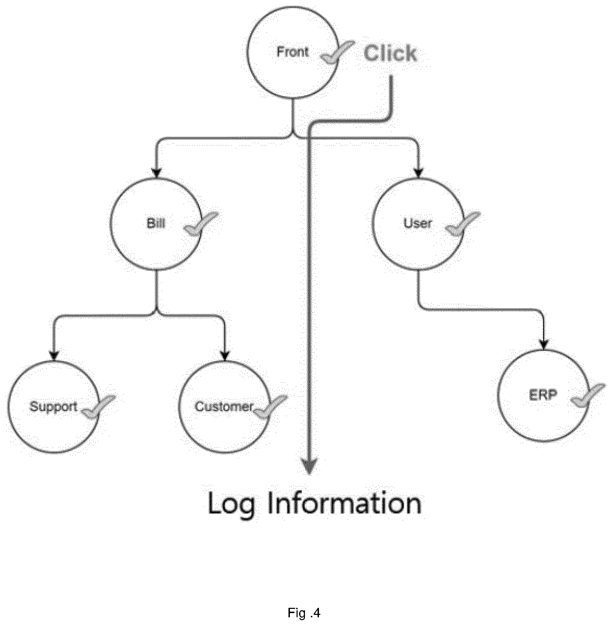

As shown in FIG. 4 showing an example of a display method, a topology of multiple applications may be displayed on the display unit, and a topology in a state in which multiple applications in a call relationship are connected to each other may be displayed. That is, a call relationship topology in which a Bill application is called by the API call of a Front application and a Support application and a Customer application are called by the API call of the Bill application may be displayed. In addition, the topology of the call relationship from the Front application to a User application and from the User application to an ERP application may be displayed.

This call relationship topology may be a call relationship topology formed by tracing a connection relationship of transaction IDs of each application in a state in which a transaction ID issued by the log collecting agent of a calling application is received by a called application and set as a parent transaction ID, a log collecting agent of the called application issues a transaction ID by itself, and thereafter, a subsequent called application receives a transaction ID of a previous called application and sets it as a parent transaction ID, and a log collecting agent of the called application issues a transaction ID again by itself.

Furthermore, the log information of each application, such as call log and execution log, along with the transaction ID of each application is transmitted to the log collecting server. When an application is clicked in the call relationship topology, log information according to the call relationship of the corresponding application may be displayed in the display unit.

In another example of the display method, log information generated from the whole service provided by executing multiple applications may be displayed in real time. Among the log information generated in the whole service, only corresponding log information according to a specific server IP or client ID may be displayed, and furthermore, it may be displayed so that a specific call relationship is identified using an indent or color. Alternatively, only predetermined call relationship may be specified and only log information according to the predetermined call relationship may be displayed.

In another example of a display method, if log information generated in the whole service is displayed in chronological order, the log information of applications that are called at the same time may be displayed together, making it difficult to distinguish each log information, and thus, the log information generated in the whole service may be grouped and displayed for each application.

Furthermore, the log information may be grouped and displayed for each call relationship identified by the transaction ID.

As the call relationship identified by the transaction ID and the log information according to the call relationship are easily classified by various display methods, it is possible to easily identify a problem in a certain stage of service.

A method of tracing a call relationship between multiple applications in a microservice architecture and displaying log information according to the call relationship will be described.

### 1. Operation of calling a first application among multiple applications

As multiple applications are executed to provide the whole service, another application may be called by an API (Application Programming Interface) call along with the execution of one application, and still another application may be called by an API call along with the execution of another application, and therefore, multiple call relationships may be established among multiple applications.

In the multiple call relationships, a first application among multiple applications may be called.

The first application may be a user interface called by a user, or an application that provides any one of all services other than the user interface, and may be an application based on an API call of the user interface, or may be an application that provides another service according to an API call of an application that provides any one of all services.

Accordingly, the second application to be described later may be an application according to an API call of the first application.

### 2. Operation of collecting log information of first application and issuing first transaction ID

As the first application is called, a first transaction ID is issued by the transaction ID issuing unit of a first log collecting agent of the first application, and log information such as call log or execution log is collected by a log information collecting unit of a first log collecting agent. The collected log information is information on a call log, an execution log, and the like, and may include log information identified by the first transaction ID.

### 3. Operation of calling second application according to API call of first application

As soon as the called first application is executed, an API call is performed to provide a service of a next stage, and a second application is called according to the API call.

At this time, an API call is performed in a state in which information on the first transaction ID issued by the transaction ID issuing unit of the first log collecting agent of the first application is included in a message header, and the first transaction ID is received by a parent transaction ID receiving unit of a second log collecting agent of the called second application and is set as a parent transaction ID. Of course, as the second application is called, a second transaction ID is issued by the transaction ID issuing unit of the second log collecting agent.

### 4. Operation of collecting log information of second application

Log information is collected by a log information collecting unit of the second log collecting agent of the second application. At this time, the log information may include information on a log progressed according to an API call, specifically log information identified by the first transaction ID which is received according to an API call and set parent transaction ID and the second transaction ID.

### 5. Operation of transmitting transaction ID and log information to the log collecting server and displaying transmitted log information

The log information of the first application collected by the log information collecting unit of the first log collecting agent and the log information of the second application collected by the log information collecting unit of the second log collecting agent are transmitted to the log collecting server and the log information of the first application and log information of the second application may be displayed on the display unit of the log collecting server.

When the log information is transmitted to the log collecting server, the log information of the first application and log information of the second application identified by the first transaction ID may be transmitted together with the first transaction ID. Accordingly, the call relationship may be traced in the log collecting server, and the log information according to the traced call relationship may be displayed in an identified state.

The display unit displays the log information stored in the log information storage unit, and as described above, it may be displayed in various forms desired by the user.

In the above, the present specification has been described with reference to the embodiments shown in the drawings so that those skilled in the art may easily understand and reproduce the present disclosure, but this is only exemplary, and it may be understood by those skilled in the art that various modifications and equivalents may be made from the embodiments of the present disclosure. Therefore, the scope of the present disclosure should be defined by the claims.

## Claims

1. A method of tracing a call relationship between multiple applications and displaying log information on the call relationship by a server in which a microservice architecture including multiple applications is built, the method comprising:
(a) calling a first application among the multiple applications;
(b) collecting log information of the first application from a first log collecting agent installed in the first application;
(c) calling a second application among the multiple applications through an application programming interface (API) call from the first application;
(d) collecting log information of the second application from a second log collecting agent installed in the second application; and
(e) transmitting the log information of the first application collected in operation (b) and the log information of the second application collected in operation (d) to a log collecting server and displaying the transmitted log information of the first application and the transmitted log information of the second application on a display unit of the log collecting server,
wherein the first log collecting agent includes a first transaction ID issuing unit, a first API calling unit, a first application log information collecting unit, a first log information transmitting unit, and a first parent transaction ID receiving unit,
the second log collecting agent includes a second transaction ID issuing unit, a second API calling unit, a second application log information collecting unit, a second log information transmitting unit, and a second parent transaction ID receiving unit,
in operation (b), as the first application is called, the first transaction ID issuing unit issues a unique first transaction ID according to the call, and the issued first transaction ID is collected by the first application log information collecting unit,
in operation (c), the first API calling unit of the first application calls the second application in a state in which the first transaction ID is added to a message header in the first log collecting agent,
in operation (d), as the second application is called, the first transaction ID is received by the second parent transaction ID receiving unit and set as a parent transaction ID, and in this state, the second transaction ID issuing unit issues a unique second transaction ID, and the first transaction ID set as the parent transaction ID and the issued second transaction ID are collected by the second application log information collecting unit,
in operation (e), the first transaction ID collected by the first application log information collecting unit is transmitted to the log collecting server through the first log information transmitting unit, the first transaction ID set as the parent transaction ID collected by the second application log information collecting unit and the second transaction ID are transmitted to the log collecting server through the second log information transmitting unit, and
in operation (e), log information of the multiple applications is displayed on the display unit, and based on the first transaction ID transmitted to the log collecting server through the first log information transmitting unit and the first transaction ID set as the parent transaction ID and the second transaction ID transmitted to the log collecting server through the second log information transmitting unit, a call relationship between the first application and the second application is traced so that log information of the first application and log information of the second application according to the call relationship between the first application and the second application identified by the first transaction ID are displayed to be identified in the log information of the multiple applications.

2. The method of claim 1, wherein topology of the multiple applications is displayed on the display unit and topology regarding a call relationship between the first application and the second application identified by the first transaction ID is displayed as a topology in a state in which the first application and the second application are connected to each other.
